# EUROPÄISCHE PATENTSCHRIFT

(11) **EP 1 621 277 B1**
(45) Veröffentlichungstag und Bekanntmachung des Hinweises auf die Patenterteilung: **10.09.2008**
(21) Anmeldenummer: 04017740.4
(22) Anmeldetag: 27.07.2004
(51) Int. Cl.: B23F 23/12, B24B 53/075

(54) **Abrichtwerkzeug zum Bearbeiten des Zahnkopfes einer Schleifschnecke**
Dressing tool for the tip of a grinding worm
Outil de dressage pour une vis sans fin de meulage

(43) Veröffentlichungstag der Anmeldung: 01.02.2006
(73) Patentinhaber: THE GLEASON WORKS, Rochester, New York 14607-1282 (US)
(72) Erfinder: Türich, Dipl.-Ing.Antoine, 81475 München (DE); Schauer, Engelbert, 85716 Unterschleissheim (DE)
(74) Vertreter: Kraus, Jürgen Helmut

(56) Entgegenhaltungen:
- EP-A- 1 361 012
- DE-A- 4 207 511
- DE-B- 2 343 494
- US-B1- 6 234 880

## Beschreibung

Die Erfindung betrifft ein Abrichtwerkzeug zum Bearbeiten des Zahnkopfes einer zum kontinuierlichen Wälzschleifen dienenden Schleifschnecke. Siehe, zum Beispiel US 6,234,880.

Eine derartige Schleifschnecke wird zum kontinuierlichen Wälzschleifen von Zahnrädern eingesetzt. Da die Schleifschnecke bei diesem Vorgang einer natürlichen Abnutzung ausgesetzt ist, muß sie von Zeit zu Zeit abgerichtet werden. Beim Abrichtvorgang wird von den Flanken des Gewindeganges oder der Gewindegänge der Schleifschnecke Material abgetragen, so daß der Kopfbereich des oder der Gewindegänge schmäler wird. Neben dem Werkzeug zum Profilieren der Schleifschnecke ist daher ein Werkzeug zum Anpassen des Kopfkreisdurchmessers der Schleifschnecke erforderlich. Der Kopfkreisdurchmesser wird so weit verringert, daß der Kopfbereich des oder der Gewindegänge der Schleifschnecke wieder die ursprünglich vorgesehene Breite aufweist. Die Einrichtung zum Abrichten der Schleifschnecke umfaßt somit üblicherweise zwei voneinander getrennte Werkzeuge. Das Werkzeug zum Profilieren der Flanken der Schleifschnecke kann beispielsweise eine Abrichtscheibe sein. Das Abrichten der Schleifschnecke mit diesen beiden Werkzeugen erfolgt üblicherweise nicht an der Stelle der Maschine, an der später das Werkstück, d. h. das Zahnrad bearbeitet wird. Aus Genauigkeitsgründen ist es aber erwünscht, daß der Abrichtvorgang an der Stelle erfolgt, an der später die Schleifschnecke die Werkstücke bearbeitet. Es wurde daher bereits vorgeschlagen, (Deutsche Patentanmeldung 102 20 513.2) zum Profilieren der Flanken der Schleifschnecke ein im wesentlichen zylindrisches Zahnrad zu verwenden, das auf der beim Abrichten aktiven Oberfläche mit einem abrasiven Belag versehen ist und das an Stelle des Werkstückes auf der Werkstückspindel der Maschine aufgenommen ist. Da dieses Zahnrad lediglich zum Profilieren der Flanken der Schleifschnecke dient, ist eine zusätzliche Einrichtung zum Anpassen des Kopfkreisdurchmessers der Schleifschnecke erforderlich.

Eine Weiterbildung dieses Arbeitsverfahrens sieht vor, daß zum Anpassen des Kopfkreisdurchmessers der Schleifschnecke eine im wesentlichen zylindrische Rolle verwendet wird, die an der Umfangsfläche mit einem abrasiven Belag versehen ist, wobei das Zahnrad und die Rolle mit der Werkstückspindel der Maschine axial- und drehfest verbindbar sind (Deutsche Patentanmeldung 103 22 181.6). Wenn die Schleifschnecke nach dem Profilieren der Schneckenflanken zum Anpassen des Kopfkreisdurchmessers mit der zylindrischen Rolle in Eingriff gebracht wird, dann wird vom Kopfbereich des Gewindeganges oder der Gewindegänge der Schleifschnecke Material abgetragen. Dabei entstehen am Übergang der Kopffläche in die Schneckenflanken scharfe Kanten. Beim Schleifen eines Zahnrades mit der in dieser Weise profilierten Schleifschnecke verursachen die erwähnten Kanten in den Zahnflanken des Zahnrades jedoch unerwünschte Bearbeitungsstufen (unstetige Profilübergänge im Zahnfußbereich).

Der Erfindung liegt die Aufgabe zugrunde, ein Abrichtwerkzeug der eingangs genannten Gattung zu schaffen, das eine Profilierung des Kopfbereichs des Gewindeganges oder der Gewindegänge der Schleifschnecke mit abgerundeten Kanten ermöglicht.

Erfindungsgemäß wird diese Aufgabe dadurch gelöst, daß in einer zylindrischen Mantelfläche des Abrichtwerkzeugs konkave Arbeitsflächen angeordnet sind, wobei die Teilung dieser mit einem abrasiven Belag versehenen Arbeitsflächen mit der Teilung der Schleifschnecke übereinstimmt, und daß das Abrichtwerkzeug mit der Schleifschnecke unter gekreuzten Achsen in Wälzeingriff bringbar ist.

Wenn ein in dieser Weise ausgebildetes Abrichtwerkzeug an der Schleifschnecke abwälzt, dann gelangen die mit einem abrasiven Belag versehenen konkaven Arbeitsflächen des Abrichtwerkzeugs mit dem Kopfbereich des Gewindeganges oder der Gewindegänge der Schleifschnecke in Eingriff. Vom Kopfbereich wird daher Material abgetragen, so daß der Kopfkreisdurchmesser der Schleifschnecke in der erforderlichen Weise verringert wird. Wegen des konkaven Profils der Arbeitsflächen entsteht am Übergang zwischen der Kopffläche und den Schneckenflanken keine Kante, sondern ein abgerundeter Übergang. Durch eine geeignete Krümmung der konkaven Arbeitsflächen läßt sich jedes gewünschte Profil des Kopfbereichs des Gewindeganges der Schleifschnecke generieren. In Anlehnung zu einem Zahnrad können diese konkaven Arbeitsflächen des Abrichtwerkzeugs unter bestimmten Schrägungswinkeln ausgeführt sein. Vorzugsweise entspricht der Schrägungswinkel demjenigen des zum Profilieren dienenden Abrichtzahnrades.

Das Abrichtwerkzeug ist vorzugsweise zusammen mit einem zum Profilieren der Schneckenflanken der Schleifschnecke dienenden zahnradförmigen Abrichtrad mit der Werkstückspindel einer zum kontinuierlichen Wälzschleifen geeigneten Maschine axial- und drehfest verbindbar. Die Tatsache, daß das Abrichtzahnrad zum Profilieren der Schneckenflanken und das Abrichtwerkzeug zum Bearbeiten des Zahnkopfes auf der Werkstückspindel aufgenommen werden können, vereinfacht das Ladekonzept. Eine weitere Zeitersparnis ergibt sich dadurch, daß das Abrichten der Flanken der Schleifschnecke und das Anpassen des Kopfkreisdurchmessers derselben in einem Arbeitszyklus erfolgen kann.

Das Abrichtzahnrad und das Abrichtwerkzeug können so ausgebildet sein, daß sie unabhängig voneinander mit der Werkstückspindel axial- und drehfest verbunden werden können. Aus verschiedenen Gründen ist es aber vorteilhafter, daß das Abrichtzahnrad und das Abrichtwerkzeug miteinander drehfest verbunden sind und als Werkzeugeinheit mit der Werkstückspindel axial- und drehfest verbindbar sind. Diese Werkzeugeinheit kann auch einstückig ausgebildet sein.

Die Ausbildung des Abrichtzahnrades und des Abrichtwerkzeugs als ein- oder zweiteilige Werkzeugeinheit ermöglicht auf vorteilhafte Weise eine Standardisierung. Zum Abrichten unterschiedlicher Schleifschnecken genügt ein Satz von Abrichtzahnrädern und Abrichtwerkzeugen mit einheitlichem Innendurchmesser, die sich nur hinsichtlich des Außendurchmessers, der Verzahnungsgeometrie und der Verzahnungsdaten bzw. der konkaven Geometrie unterscheiden.

Die Mitte der Zahnlücken des Abrichtzahnrades und die Mitte der konkaven Arbeitsflächen des Abrichtwerkzeugs liegen vorzugsweise auf einer gemeinsamen Schraubenfläche. Dadurch ist auch bei einem geringen axialen Abstand von Abrichtzahnrad und Abrichtwerkzeug ein ordnungsgemäßer Eingriff mit der Schleifschnecke gewährleistet.

Die Kontur der Arbeitsflächen des Abrichtwerkzeugs entspricht vorzugsweise der angestrebten Kontur des Zahnfußes eines mit der Schleifschnecke zu bearbeitenden Zahnrades.

Die Erfindung wird nachfolgend anhand eines in den Zeichnungen dargestellten Ausführungsbeispiels näher erläutert. Es zeigt:
Fig. 1 im Längsschnitt eine Werkstückspindel einer Maschine zum kontinuierlichen Wälzschleifen von Zahnrädern und
Fig. 2 einen Normalschnitt durch eine Schleifschnecke und eines mit dieser in Wälzeingriff gelangenden Abrichtwerkzeugs zum Bearbeiten des Zahnkopfes der Schleifschnecke.

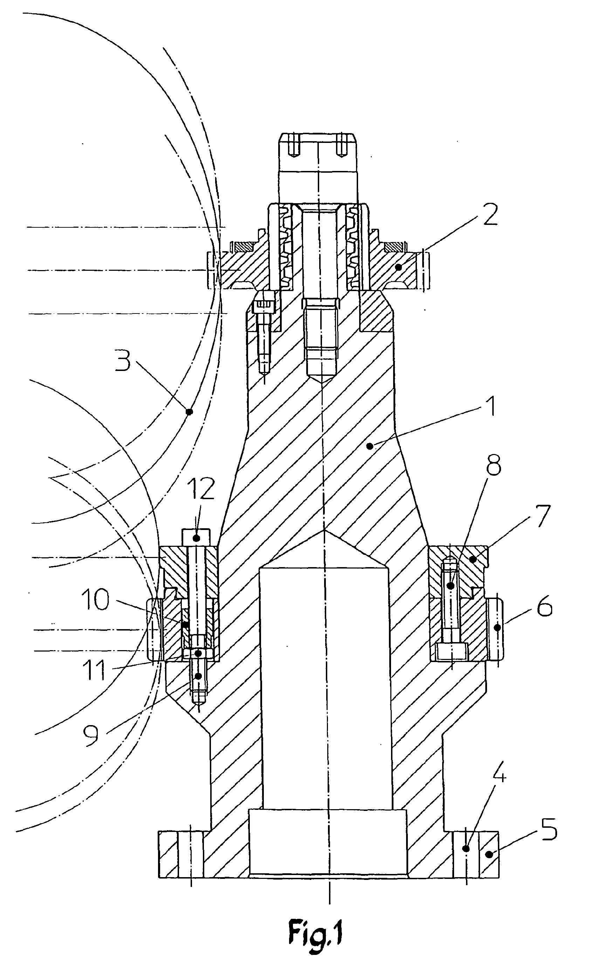

Fig. 1 zeigt im Längsschnitt eine Werkstückspindel einer Maschine zum kontinuierlichen Wälzschleifen von Zahnrädern im Tangential- oder Diagonalverfahren. Auf das in der Zeichnung obere freie Ende der Werkstückspindel ist ein Zahnrad 2 gespannt, das mit einer durch ein elliptische Umrißlinie angedeuteten zylindrischen Schleifschnecke 3 feinbearbeitet wird. Die Schleifschnecke 3 ist auf einer (nicht gezeigten) Werkzeugspindel drehfest angeordnet. Da der Aufbau einer zum kontinuierlichen Wälzschleifen eingesetzten Maschine grundsätzlich bekannt ist, kann eine nähere Erläuterung der Maschine entfallen.

Der freie Endbereich der Werkstückspindel 1 geht über einen konischen Bereich in einen zylindrischen Bereich mit vergrößertem Durchmesser über, an den sich eine Ringschulter anschließt. Am anderen Ende weist die Werkstückspindel 1 einen mit Bohrungen 4 versehenen Ringflansch 5 zur Befestigung an einer Antriebswelle der Maschine auf. Ein Abrichtwerkzeug zum Abrichten der Schleifschnecke 3 besteht aus einem im wesentlichen zylindrischen Abrichtzahnrad 6 und aus einem im wesentlichen zylindrischen Abrichtwerkzeug 7.

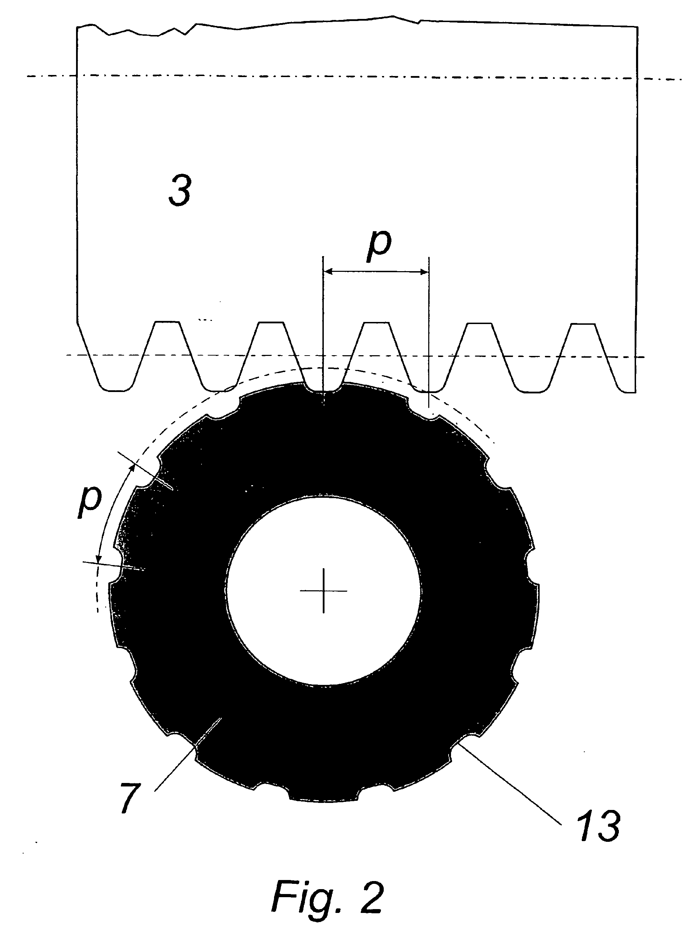

Wie aus der Darstellung nach Fig. 2 hervorgeht, sind in der zylindrischen Mantelfläche des Abrichtwerkzeugs 7 konkave Arbeitsflächen 13 angeordnet. Die Teilung P der Arbeitsflächen 13 des Abrichtwerkzeugs 7 stimmt mit der Teilung P der Schleifschnecke 3 überein. Ebenso wie die Zähne des Abrichtzahnrades 6 können die Arbeitsflächen 13 des Abrichtwerkzeugs 7unter bestimmten Schrägungswinkeln ausgeführt sein. Vorzugsweise entspricht der Schrägungswinkel demjenigen des Abrichtzahnrades. Bei dem gezeigten Ausführungsbeispiel sind die konkaven Arbeitsflächen 13 des Abrichtwerkzeugs 7 mit einem bestimmten Fußrundungsradius ausgeführt. In Abhängigkeit vom jeweiligen Anwendungsfall ist aber auch ein anderes konkaves Profil möglich.

Das Abrichtzahnrad 6 ist auf seiner beim Abrichten aktiven Oberfläche, d. h. im Bereich der Zahnflanken mit einem abrasiven Belag versehen. In gleicher Weise ist das Abrichtwerkzeug 7 auf seiner beim Abrichten aktiven Oberfläche, d. h. im Bereich der Arbeitsflächen 13 mit einem abrasiven Belag versehen. Das Abrichtzahnrad 6 und das Abrichtwerkzeug 7 sind in der nachfolgend beschriebenen Weise zu einer Werkzeugeinheit zusammengefaßt.

Das Abrichtzahnrad 6 und das Abrichtwerkzeug 7 sind zur gegenseitigen Zentrierung mit korrespondierenden ringförmigen Vorsprüngen bzw. Ausnehmungen versehen, und sie haben den gleichen Innendurchmesser, der geringfügig größer ist als der Außendurchmesser des zylindrischen Bereichs der Werkstückspindel 1. Wie in der linken Hälfte von Fig. 1 gezeigt, sind das Abrichtzahnrad 6 und das Abrichtwerkzeug 7 mit mehreren, vorzugsweise drei fluchtenden Bohrungen versehen, wobei die in dem Abrichtzahnrad ausgebildeten Bohrungen aus einem nachfolgend erläuterten Grund einen größeren Durchmesser haben. In der Ringschulter der Werkstückspindel 1 sind entsprechende Gewindebohrungen 9 angeordnet. Vorzugsweise sind diese fluchtenden Bohrungen derart positioniert, daß die Mitte der Zahnlücken des Abrichtzahnrades 6 und die Mitte der konkaven Arbeitsflächen 13 des Abrichtwerkzeugs 7 auf einer gemeinsamen Schraubenfläche liegen.

Bei der Montage der Abrichtwerkzeugeinheit wird als erstes eine Spannschraube 12 in die Bohrungen des Abrichtzahnrades 6 eingesetzt, und sodann wird eine Gewindebuchse 10 auf die Spannschraube aufgeschraubt und mit einer Mutter 11 gekontert.

Wie in der rechten Hälfte von Fig. 1 gezeigt, ist das Abrichtzahnrad 6 über den Umfang mit mehreren, vorzugsweise drei abgestuften Bohrungen versehen. Das Abrichtwerkzeug 7 ist mit entsprechenden Gewindebohrungen versehen, so daß das Abrichtzahnrad 6 und das Abrichtwerkzeug 7 mit Schrauben 8 drehfest verbunden werden können. Diese von dem Abrichtzahnrad 6 und dem Abrichtwerkzeug 7 gebildete Werkzeugeinheit wird auf dem zylindrischen Bereich der Werkstückspindel 1 angeordnet. Die Spannschrauben 12 werden sodann in die zugehörigen Gewindebohrungen 9 der Werkstückspindel 1 eingeschraubt, so daß das Abrichtzahnrad 6 an der Ringschulter der Werkstückspindel zu Anlage gelangt. Der an die Ringschulter angrenzende Abschnitt des zylindrischen Bereichs der Werkstückspindel 1 hat einen geringfügig vergrößerten Außendurchmesser, so daß sich mit dem Abrichtzahnrad 6 ein Preßsitz ergibt. Die aus dem Abrichtzahnrad 6 und dem Abrichtwerkzeug 7 bestehende Werkzeugeinheit ist somit in konzentrischer Anordnung mit der Werkstückspindel 1 axial- und drehfest verbunden.

Wenn die Schleifschnecke 3 infolge Abnutzung abgerichtet werden muß, dann werden die Werkzeugspindel und die Werkstückspindel 1 der Maschine relativ zueinander bewegt, um die Schleifschnecke 3 und das Abrichtzahnrad 6 unter einem geeigneten Kreuzungswinkel miteinander in Eingriff zu bringen. Die Flanken der Schleifschnecke 3 werden sodann in einem Tangential- oder Diagonalverfahren profiliert. Hierbei ist es lediglich notwendig, die technologischen Größen, wie Zustellung, Vorschub und Drehzahl der Schleifschnecke 3 auf die konkret vorliegende Abrichtaufgabe abzustimmen. Alle für das Abrichten der Schleifschnecke im Tangential- oder Diagonalverfahren erforderlichen Bewegungen können über die ohnehin vorhandenen Maschinenachsen ausgeführt werden.

Nach dem Profilieren der Flanken der Schleifschnecke 3 mit dem Abrichtzahnrad 6 erfolgt eine Relativbewegung der Werkstückspindel 1 und der Werkzeugspindel, um die Schleifschnecke 3 gegenüber dem Abrichtwerkzeug 7 anzuordnen. Genauer gesagt, die Schleifschnecke 3 wird zum Anpassen des Kopfkreisdurchmessers mit den Arbeitsflächen 13 des Abrichtwerkzeugs 7 in Wälzeingriff gebracht. Wenn die Schleifschnecke 3 und das Abrichtwerkzeug 7 aneinander abwälzen, gelangen die Arbeitsflächen 13 des Abrichtwerkzeugs 7 nacheinander mit dem Kopfbereich des Gewindeganges oder der Gewindegänge der Schleifschnecke 3 in Eingriff. Wegen der dabei erfolgenden Relativbewegung wird durch die Arbeitsflächen 13 vom Kopfbereich der Gewindegänge an der Schleifschnecke Material abgetragen. Dadurch wird der Kopfkreisdurchmesser der Schleifschnecke 3 in der erforderlichen Weise reduziert, wobei eine konvexe, für den jeweiligen Anwendungsfall erforderliche Kopffläche erzeugt wird. Das Profilieren der Flanken der Schleifschnecke und das entsprechende Anpassen des Kopfkreisdurchmessers erfolgt somit in einem Arbeitszyklus.

Wenn mit einer in dieser Weise abgerichteten Schleifschnecke ein Zahnrad bearbeitet wird, dann kann ein sauber ausgerundetes Profil des Zahnfußes ohne störende Bearbeitungsstufen erhalten werden. Genauer gesagt, das konkave Profil der Arbeitsflächen 13 des Abrichtwerkzeugs 7 wird am Zahnfuß des mit der Schleifschnecke 3 bearbeiteten Zahnrades reproduziert.

Grundsätzlich wäre es auch möglich, das konvexe Profil des Zahnkopfes der Schleifschnecke 3 mit einem entsprechend ausgebildeten Abrichtzahnrad 6 zu erzeugen. Zu diesem Zweck müßte das Abrichtzahnrad 6 nicht nur im Bereich seiner Zahnflanken, sondern auch im Bereich des Zahnfußes mit dem Gewindegang oder den Gewindegängen der Schleifschnecke 3 in Eingriff gebracht werden. In der Praxis hat sich aber gezeigt, daß es außerordentlich schwierig ist, das Abrichtzahnrad 6 im Bereich des Zahngrundes in der erforderlichen Qualität mit einem abrasiven Belag zu versehen, damit dieser Bereich des Abrichtzahnrades den Kopfbereich der Schleifschnecke bearbeitet. Mit dem in der Zeichnung dargestellten und vorstehend beschriebenen Abrichtwerkzeug 7 wird das Problem der Herstellbarkeit derartiger abrasiver Beläge im Zahnfußbereich wesentlich vereinfacht.

Mit einem standardisierten Satz von aus Abrichtzahnrad 6 und Abrichtwerkzeug 7 bestehenden Werkzeugeinheiten, die einen einheitlichen Innendurchmesser aufweisen, können unterschiedlich profilierte Schleifschnecken 3 abgerichtet werden.

Wenn das Abrichtzahnrad 6 infolge Abnutzung ausgetauscht werden muß, dann werden die Spannschrauben 12 aus den Gewindebohrungen 9 der Werkstückspindel 1 herausgeschraubt. Dies hat zur Folge, daß die durch die Mutter 11 mit der Spannschraube 12 drehfest verbundene Gewindebuchse 10 an der Rolle 7 zur Anlage gelangt. Wenn die Spannschraube 12 weiter aus der Gewindebohrung 9 herausgeschraubt wird, dann wird auf die Rolle 7 eine Axialkraft ausgeübt, die über die Schrauben 8 auf das Abrichtzahnrad 6 übertragen wird. Unter dieser Axialkraft wird das Abrichtzahnrad 6 von der Werkstückspindel 1 abgedrückt. Sobald das Abrichtzahnrad 6 gegenüber der Werkstückspindel 1 hinreichend weit axial verschoben ist, so daß der Preßsitz in einen Schiebesitz übergeht, kann die aus Abrichtzahnrad 6 und Abrichtwerkzeug 7 bestehende Werkzeugeinheit von der Werkstückspindel 1 abgezogen werden.

Abweichend von dem gezeigten Ausführungsbeispiel könnte das Abrichtwerkzeug 7 auch an seiner gesamten Umfangsfläche mit einem abrasiven Material versehen sein. Dies würde es ermöglichen, die zylindrischen Flächen zwischen den konkaven Arbeitsflächen 13 zu einer Bearbeitung des Schneckenkopfes zu verwenden.

### Bezugszeichenliste:

- 1: Werkstückspindel
- 2: Zahnrad
- 3: Schleifschnecke
- 4: Bohrungen
- 5: Ringflansch
- 6: Abrichtzahnrad
- 7: Abrichtwerkzeug
- 8: Schrauben
- 9: Gewindebohrung
- 10: Gewindebuchse
- 11: Mutter
- 12: Spannschraube
- 13: Arbeitsflächen

## Patentansprüche

1. Abrichtwerkzeug zum Bearbeiten des Zahnkopfes einer zum kontinuierlichen Wälzschleifen dienenden Schleifschnecke, **dadurch gekennzeichnet, daß** in einer zylindrischen Mantelfläche des Abrichtwerkzeugs (7) konkave Arbeitsflächen (13) angeordnet sind, wobei die Teilung (P) dieser mit einem abrasiven Belag versehenen Arbeitsflächen (13) mit der Teilung (P) der Schleifschnecke (3) übereinstimmt, und daß das Abrichtwerkzeug (7) mit der Schleifschnecke (3) unter gekreuzten Achsen in Wälzeingriff bringbar ist.

2. Abrichtwerkzeug nach Anspruch 1, **dadurch gekennzeichnet, daß** es zusammen mit einem zum Profilieren der Schneckenflanken der Schleifschnecke (3) dienenden zahnradförmigen Abrichtrad (6) mit der Werkstückspindel (1) einer zum kontinuierlichen Wälzschleifen geeigneten Maschine axial- und drehfest verbindbar ist.

3. Abrichtwerkzeug nach Anspruch 2, **dadurch gekennzeichnet, daß** es zur Bildung einer Werkzeugeinheit mit dem zahnradförmigen Abrichtrad (6) koaxial drehfest verbunden ist, und daß diese Werkzeugeinheit (6, 7) mit der Werkstückspindel (1) der Maschine axial- und drehfest verbindbar ist.

4. Abrichtwerkzeug nach Anspruch 3, **dadurch gekennzeichnet, daß** die Mitte der Zahnlücken des Abrichtrades (6) und die Mitte der konkaven Arbeitsflächen (13) des Abrichtwerkzeugs (7) auf einer gemeinsamen Schraubenfläche liegen.

5. Abrichtwerkzeug nach Anspruch 3 oder 4, **dadurch gekennzeichnet, daß** die Werkzeugeinheit einstückig ausgebildet ist.

6. Abrichtwerkzeug nach einem der Ansprüche 1 bis 5, **dadurch gekennzeichnet, daß** die Kontur der Arbeitsflächen (13) der angestrebten Kontur des Zahnfußes eines mit der Schleifschnecke (3) zu bearbeitenden Zahnrades (2) entspricht.

## Claims

1. A dressing tool for machining the tooth tip of a grinding worm used for continual roller grinding, **characterised in that** concave working faces (13) are disposed in a cylindrical surface of the dressing tool (7), the division (P) of these working faces (13) provided with an abrasive coating corresponding to the division (P) of the grinding worm (3), and that the dressing tool (7) can be brought into rolling engagement with the grinding worm (3) under crossed axes.

2. The dressing tool according to Claim 1, **characterised in that** together with a dressing wheel (6) in the form of a toothed wheel used for profiling the worm edges of the grinding worm (3) it can be connected in an axially fixed and rotatably undisplaceable manner to the workpiece spindle (1) of a machine suitable for continual roller grinding.

3. The dressing tool according to Claim 2, **characterised in that** it is connected in a coaxially rotatably undisplaceable manner to the dressing wheel (6) in the form of a toothed wheel in order to form a tool unit, and that this tool unit (6, 7) is connected to the workpiece spindle (1) of the machine in an axially fixed and rotatably undisplaceable manner.

4. The dressing tool according to Claim 3, **characterised in that** the centre of the tooth gaps of the dressing wheel (6) and the centre of the concave working faces (13) of the dressing tool (7) lie on a common helicoid.

5. The dressing tool according to Claim 3 or 4, **characterised in that** the tool unit is formed in one piece.

6. The dressing tool according to any of Claims 1 to 5, **characterised in that** the contour of the working faces (13) corresponds to the desired contour of the tooth root of a toothed wheel (2) to be machined with the grinding worm (3).

## Revendications

1. Outil de dressage pour usiner les têtes des dents d'une vis sans fin de rectification servant à rectifier en continu, **caractérisé en ce que** dans la surface externe cylindrique de l'outil de dressage (7) sont prévues des portées d'usinage (13) concaves qui sont garnies d'un revêtement abrasif et dont l'écartement (P) correspond à celui de la vis sans fin de rectification (3), et qu'avec cette vis l'outil de dressage (7) peut être amené en prise d'usinage avec croisement des axes.

2. Outil de dressage selon la revendication 1, **caractérisé en ce qu'**il peut, en même temps qu'une roue de dressage (6) en forme de pignon servant à profiler les flancs de la vis sans fin, être rendu solidaire axialement et en rotation de la broche porte-pièce (1) d'une machine de rectification en continu.

3. Outil de dressage selon la revendication 2, **caractérisé en ce qu'**il est rendu solidaire coaxialement en rotation de la roue de dressage (6) en forme de pignon dans le but de réaliser une unité d'usinage (6, 7) qui peut être reliée avec solidarité axiale et en rotation, à la broche porte-pièce (1) de la machine.

4. Outil de dressage selon la revendication 3, **caractérisé en ce que** les milieux des creux de la roue de dressage (6) et les milieux des portées d'usinage (13) concaves de l'outil de dressage (7) se trouvent sur une même surface hélicoïdale.

5. Outil de dressage selon la revendication 3 ou 4, **caractérisé en ce que** l'unité d'usinage est réalisée d'une seule pièce.

6. Outil de dressage selon une des revendications 1 à 5, **caractérisé en ce** le contour des portées d'usinage (13) correspond au contour désiré pour les pieds des dents d'un pignon (2) à usiner au moyen de la vis sans fin (3).
